# EUROPÄISCHE PATENTSCHRIFT

(11) **EP 1 070 681 B1**
(45) Veröffentlichungstag und Bekanntmachung des Hinweises auf die Patenterteilung: **16.10.2002**
(21) Anmeldenummer: 00115188.5
(22) Anmeldetag: 13.07.2000
(51) Int. Cl.: C03C 3/095

(54) **Alkalifreies Aluminoborosilicatglas, seine Verwendungen und Verfahren zu seiner Herstellung**
Alkali-free aluminoborosilicate glass, its uses and process of production
Verre aluminoborosilicaté sans alcalin, ses utilisations et son procédé de fabrication

(30) Priorität: 23.07.1999 DE 19934072
(43) Veröffentlichungstag der Anmeldung: 24.01.2001
(73) Patentinhaber: Schott Glas, 55122 Mainz (DE); CARL-ZEISS-STIFTUNG trading as Schott Glas, 55122 Mainz (DE)
(72) Erfinder: Lautenschläger, Gerhard, Dr., 07743 Jena (DE); Schneider, Klaus, 99520 Apolda (DE); Kloss, Thomas, 07751 Jena (DE); Sprenger, Andreas, 55122 Mainz (DE)

(56) Entgegenhaltungen:
- EP-A- 0 901 990
- DE-A- 19 601 922
- DATABASE WPI Section Ch, Week 199717 Derwent Publications Ltd., London, GB; Class L01, AN 1997-188222 XP002150380 & JP 09 048632 A (NIPPON ELECTRIC GLASS CO), 18. Februar 1997 (1997-02-18)

## Beschreibung

Gegenstand der Erfindung ist ein alkalifreies Aluminoborosilicatglas, beispielsweise für den Einsatz in der Displaytechnik und für andere Anwendungen, und ein Verfahren zu seiner Herstellung.

Die prinzipiellen Anforderungen an ein Glas, welches in der Displaytechnik, z.B. als Frontscheibe für einen flachen Bildschirm, eingesetzt werden soll, sind ausführlich von W. H. Dumbaugh, P. L. Bocko und F. P. Fehlner ("Glasses for flatpanel displays" in "High-Performance Glasses", hrsg. von M. Cable und J. M. Parker, Blackie and Son Limited, Glasgow und London, 1992) beschrieben worden. Die derzeit verfügbaren Gläser für TFT (Thin film transistor) -Anwendungen sind auch in dem Artikel "Advanced glass substrates for flat panel displays" von J. C. Lapp, P. L. Bocko und J. W. Nelson, Coming Research 1994 zusammengestellt. Die Güte der für Flachglassubstrate nötigen Eigenschaften, die maßgeblich die Präzision der Abbildungseigenschaften eines Systems beeinflussen, ergibt sich zum einen direkt aus der Glaszusammensetzung und zum anderen auch aus den Herstellungs-, Verarbeitungs- und Formgebungsverfahren und deren Vermögen, bestimmte Eigenschaften der Gläser wie Dickenprofil- und Ebenheitsparameter einzustellen, wobei die Verwendbarkeit der Verfahren häufig wieder durch die Glaszusammensetzung bzw. durch Glaseigenschaften limitiert ist.

Borosilicatgläser spielen bei einer Vielzahl von technisch orientierten Glasapplikationen eine herausragende Rolle. Besonders zeichnen sie sich durch hohe Temperaturwechsel- und Temperaturunterschiedsfestigkeit, geringe thermische Ausdehnung und gute Resistenz gegenüber aggressiven Reagenzien und Medien aus.
Damit sind Borosilicatgläser prinzipiell auch für den Einsatz als Substratglas in der Displaytechnik interessant, jedoch erfordert der Display-Herstellungsprozeß, beispielsweise für Thin Film Active Matrix Liquid Crystal Displays (TFT-AMLCD), sowie die gewünschte Anwendung ein ganz spezielles Eigenschaftsprofil der Gläser:
- ein an polykristallines Silicium angepaßter thermischer Ausdehnungskoeffizient α_{20/300} von 3,0 bis 3,8x10⁻⁶/K. Insbesondere ein α_{20/300} zwischen 3,0 und 3,3 x 10⁻⁶/K bedeutet eine gute Dehnungsanpassung auch bis zu Temperaturen von 700 °C
- eine Temperatur bei der Viskosität 10^{14,5} dPas von wenigstens 680 °C zur Sicherung einer hohen thermischen Prozeß- und Formstabilität des Glases während der Herstellung, insbesondere eines geringen Kompaktionsverhaltens (compaction, Schrumpf) des Glases in der Abkühlphase.
- eine alkalifreie Glaszusammensetzung, wobei ein Maximalgehalt an Alkalioxiden von Σ R₂O = 2000 ppm tolerierbar ist, um eine Vergiftung der mikrostrukturierten Dünnfilm-Transistoren durch in die Halbleiterschicht eindiffundierende Alkaliionen zu vermeiden.
- eine hohe Hochtemperatur-Prozeßstabilität dokumentiert durch eine Transformationstemperatur Tg zwischen 710 °C und 780 °C.
- eine ausreichende chemische, d.h. hydrolytische, Säure- und Alkali-Beständigkeit gegenüber den beim Mikrostrukturierungsprozeß eingesetzten Reagenzien und Medien.
- eine möglichst geringe Dichte, d.h. ρ < 2,50 g/cm³, um beim Trend zu großen Bildschirmformaten das Gesamtgewicht des Displays gering zu halten.

Darüber hinaus muß die visuelle Qualität der Glasscheiben, d.h. die Qualität bezüglich der Abwesenheit von kristallinen Einschlüssen, Knoten und Blasen sehr gut sein.

Dieses komplexe und umfangreiche Anforderungsprofil wird am ehesten durch Borosilicatgläser aus der Subfamilie der Erdalkali-Aluminoborosilicatgläser erfüllt. Die bekannten und kommerziell erhältlichen Gläser für TFT-AMLCD- Anwendungen gehören zu dieser Glasart; und so sind auch die Gläser der nachfolgend diskutierten Patentschriften bzw. -anmeldungen Vertreter dieser Gruppe. Jedoch weisen alle derzeit bekannten Gläser für Display-Anwendungen noch Nachteile auf und erfüllen nicht den gesamten Anforderungskatalog:

In der Patentschrift US 5,506,180 werden thermisch stabile und chemisch beständige Gläser u.a. für den Einsatz als TFT-Display-Glas beschrieben. Aufgrund der hohen B₂O₃-Gehalte von 10% und mehr und der niedrigen SiO₂-Anteile (46-56%) sind solche Gläser nicht ausreichend beständig gegen Salzsäure. Auch ihre Beständigkeit gegen flußsäurehaltige Lösungen ist nur mäßig. Die Anpassung der thermischen Ausdehnung an polykristallines Silicium ist unzureichend. Die Verarbeitungstemperaturen V_{A} von weniger als 1150° C sind zu niedrig, um alternativ zum Floatprozeß auch Ziehverfahren wie das Microsheet-Down-Draw-Verfahren oder das Overflow-Fusion-Verfahren anwenden zu können. Auch die angegebenen unteren Kühltemperaturen (Strain Point) von 642° C und weniger sind zu niedrig, um eine geringe "compaction" sicher zu stellen.

Die europäische Patentschrift EP 510 544 B1 beschreibt alkalifreie Gläser, die im Floatprozeß darstellbar sind und u.a. als Substrat für verschiedene Displays und Photomasken verwendet werden. Die Gläser besitzen nur sehr geringe B₂O₃-Anteile und sind BaO- und MgO-frei. Mit CaO-Gehalten von wenigstens 10 Gew.-% und SrO-Gehalten von wenigstens 11 Gew.-% weisen sie dennoch nachteilig hohe Erdalkali-Gehalte auf. Die thermische Ausdehnung der Gläser genügt mit 4,5 - 6,0 x 10⁻⁶/K bereits nicht mehr den Anforderungen an hochwertige an polykristallines Silicium angepaßte TFT-Displaygläser.

Die Patentschrift EP 527 320 B1 beschreibt Flachdisplay-Anzeigevorrichtungen mit einem Strontiumaluminosilicat-Glassubstrat mit einem Gehalt von wenigstens 21 Mol-% SrO. Die Glaszusammensetzungen für Gläser mit hoher Entglasungsstabilität scheinen speziell auf die Eignung zur Darstellung im Overflow-Fusion-Ziehverfahren ausgerichtet zu sein. Die Dichte der Gläser und ihr thermischer Ausdehnungskoeffizient sind zu hoch.

In der japanischen JP 8-295530 A werden alkalifreie Glassubstrate beschrieben, deren Beständigkeit gegenüber Salzsäure aufgrund des hohen B₂O₃-Gehaltes (bis zu 15 Gew.-%) gering sein wird.

Auch in der PCT-Anmeldung WO 97/11919 und werden alkalifreie Glassubstrate beschrieben. Die verhältnismäßig SiO₂-armen Gläser sind MgO -frei bzw. -arm. Sie können jeweils bis zu 5 Gew.-% ZnO und TiO₂ enthalten. ZnO kann durch seine Neigung zur Verdampfung aus der Glasoberfläche im Floatbad und anschließender Kondensation Glasfehler verursachen. Der mögliche hohe Gehalt an TiO₂ wird bei Verwendung von herkömmlichen Rohstoffen einen braunen Farbstich in den Gläsern bewirken, da das in üblichen Rohstoffen immer vorhandene Fe³⁺ mit Ti⁴⁺ einen braunen Farbkomplex bildet. Ähnliches gilt für die Glassubstrate aus WO 97/11920.

In der europäischen Patentanmeldung EP 714 862 A1 werden alkalifreie ZrO₂und TiO₂-freie Gläser für den TFT-Flachdisplay-Einsatz beschrieben. Solche Aluminosilicatgläser mit relativ hohen SiO₂ -Gehalten sind hochviskos, so daß eine effiziente Läuterung äußerst problematisch ist. Daher werden diese Gläser die geforderten hohen Anforderungen bzgl. der visuellen Qualität nicht aufweisen.

EP 672 629 A2 bzw. US 5,508,237 beschreiben Aluminosilicatgläser für Flachdisplays. Sie zeigen verschiedene Zusammensetzungsbereiche mit verschiedenen thermischen Ausdehnungskoeffizienten. Diese Gläser sollen angeblich nicht nur mit dem Overflow-Fusion-Ziehverfahren, sondern auch mit anderen Flachglasherstellungsverfahren verarbeitbar sein. Jedoch werden insbesondere die Gläser, die eine an polykristallines Si angepaßten thermischen Ausdehnungskoeffizienten haben, sehr hohe Verarbeitungstemperaturen V_{A} aufweisen, die sie für den Floatprozeß ungeeignet machen. Wie bei den bisher beschriebenen Gläsern wird auch hier die visuelle Qualität nicht hoch sein, da kein Weg zu einer effektiven, insbesondere einer floatverträglichen Läuterung, gezeigt wird. Die beispielhaft genannten Läutermittel Sb₂O₃ und As₂O₃ sind aufgrund ihrer leichten Reduzierbarkeit für den Floatprozeß ungeeignet. Gleiches gilt für die optionalen Glaskomponenten Ta₂O₅ und Nb₂O₅.

Auch bei den alkalifreien Glassubstraten für TFT-AMLCD aus der JP 9-48632 A wird die visuelle Qualität nicht hoch sein, da lediglich SiO₂, B₂O₃, MgO und BaO im Glas vorhanden sein müssen.

In der deutschen Patentschrift DE 38 08 573 C2 werden alkalifreie SrO- und B₂O₃ -freie, SnO₂-haltige Aluminosilicatgläser beschrieben, die gut schmelzbar und kostengünstig läuterbar sind. Die Gläser zeigen eine hohe chemische Beständigkeit. Sie werden als Photomaskenglas verwendet. Ihr thermisches Ausdehnungsverhalten ist mit 4.0 x 10⁻⁶/K noch nicht optimal an das von polykristallinem Si angepaßt. Durch ihre B₂O₃ -Freiheit haben die Gläser einen für Flachglasherstellungsprozesse ungünstigen Temperatur-Viskositäts- Verlauf.

Die deutsche Patentschrift der Anmelderin DE 196 17 344 C1 beschreibt ebenfalls alkalifreie, SnO₂ -haltige Gläser. Die Gläser besitzen einen niedrigen SnO₂-Anteil und sind TiO₂ -frei. Mit einem thermischen Ausdehnungskoeffizienten von ca. 3,7 x 10⁻⁶/K und einer sehr guten chemischen Beständigkeit sind diese Gläser geeignet für den Einsatz in der Displaytechnik. Es besteht jedoch noch Verbesserungsbedarf hinsichtlich einer wirtschaftlichen Darstellbarkeit im Float- und auch im Ziehverfahren, d.h. also hinsichtlich einer "universellen" Darstellbarkeit, sowie hinsichtlich der gewünschten Herabsetzung der thermischen Ausdehnung und der Dichte. Dies gilt auch für die TiO₂- und SrO -freien Gläser aus der deutschen Patentschrift der Anmelderin DE 196 036 98 C1.

In einer weiteren deutschen Patenschrift der Anmelderin, in DE 197 39 912 C1, werden bereits alkalifreie Aluminoborosilicatgläser mit vergleichsweise geringen SiO₂ -Gehalten beschrieben, die als Substratgläser für derzeitige TFT-Displays sehr gut geeignet sind. Lediglich hinsichtlich der in Zukunft steigenden Anforderungen in Bezug auf eine geringe Dichte aufgrund größer werdender Bildschirmformate sowie auf eine möglichst genaue Dehnungsanpassung an polykristallines Silicium besteht noch Verbesserungsbedarf.

In WO 97/30001 werden Substrate für Solarzellen und TFTs beschrieben, die aus Gläsern oder Glaskeramiken auf der Basis eines Aluminosilicatglases bestehen, die eine thermische Stabilität von wenigstens 700 °C besitzen. Ihre Bestandteile und deren Zusammensetzungsbereiche können innerhalb eines sehr großen Rahmens variieren und variieren entsprechend auch in ihren Eigenschaften. Die Gläser können Cs₂O enthalten. Aufgrund ihrer B₂O₃ -Freiheit werden die Gläser relativ hohe Dichten aufweisen und eine unzureichende Kristallisationsstabilität besitzen.

WO 98/27019 beschreibt Substrate für Flachglas - Displays und Photovoltaik - Vorrichtungen aus Gläsern, die einen thermischen Ausdehnungskoeffizienten α_{0/300} zwischen 3,0 x 10⁻⁶/K und 4,0 x 10⁻⁶/K und eine Temperatur bei 10^{14,5} dPas von mehr als 600 °C besitzen und die aus SiO₂, Al₂O₃, B₂O₃ und Erdalkalioxid (en) (10 - 25 Gew.-% RO) bestehen, wobei von den RO lediglich CaO zwingend vorhanden ist und SrO + BaO zwischen 0 und 3 Gew.-% beträgt. Bei einem solchen unausgewogenem Verhältnis zwischen kleinen Kationen und großen Kationen der Erdalkalien ist wiederum die Entglasungsfestigkeit nicht gut.

Die deutsche Offenlegungsschrift DE 196 01 922 A1 beschreibt alkalifreie SnOhaltige Gläser mit eher hohem B₂O₃-Gehalt un dmit Erdalkalioxidanteilen, die in einem sehr großen Bereicht variieren können.

JP 9-263 421 A und JP 10-454 22 A beschreiben alkalifreie Gläser für die Anwendung als Substrate in Flachdisplaysystemen, die im Floatverfahren verarbeitbar sind. Die aufgeführten Gläser weisen eher hohe Temperaturen bei der Viskosität 10² dPas auf, ein Zeichen für schlechte Schmelzbarkeit, was eine kostengünstige Herstellung unmöglich macht, da durch den nötigen Temperaturbereich auch sehr hohe Anforderungen an das Wannen- und Verteilermaterial hinsichtlich Korrosionsbeständigkeit bestehen. Die Gläser aus JP 10-454 22 A sind TiO₂-, ZrO₂- und CeO₂-frei. Die Dichte der BaO-haltigen Gläser ist mit ρ > 2,6g/cm³ relativ hoch. Die Gläser aus JP 9-263 421 A enthalten vorzugsweise kein BaO und sind TiO₂-, ZrO₂- und CeO₂- und SnO₂-frei.

In JP 10-130034 A, JP 10-114538 A und JP 10-59741 A werden ebenfalls alkalifreie Gläser für eine Verwendung als Substratglas in Displays vorgestellt.

Ihre Bestandteile und deren Zusammensetzungsbereiche können allerdings innerhalb eines sehr großen Rahmens schwanken und variieren entsprechend auch in ihren Eigenschaften. Die Gläser können alle bis zu 10 Gew.-% ZnO enthalten, was für eine Darstellung im Floatverfahren ungünstig ist.
Die Gläser der JP 10-130034 A enthalten mindestens 0,05 Gew.-% As₂O₃ und 0,05 Gew.-% SnO₂. Eine Darstellung im Floatverfahren scheidet aufgrund des As₂O₃-Gehaltes aus. Durch die teilweise sehr geringen SiO₂-Gehalte (nur ca. 55 Gew.-%) in den Beispielgläsem entspricht auch die HCI-Beständigkeit nicht den Anforderungen, die an Flachglas- und Photovoltaik-Substrate gestellt werden. JP 10-114538 A ersetzt die As₂O₃-Läuterung in JP 10-130034 A durch Sb₂O₃ und enthält deswegen bedingungsmäßig zwischen 0.05 und 3 Gew.-% Sb₂O₃, was eine floatverträgliche Herstellung ebenfalls ausschließt.
In JP 10-59741 A sind 0,05 - 2,0 Gew.-% SnO₂ alleiniges Läutermittel. Zusätze und/oder Komponenten, die das vierwertige Zinndioxid bis zur Läutertemperatur stabilisieren und die vorzeitige Sauerstofffreisetzung verhindern, werden in der Schrift nicht genannt. Aufgrund dieser Tatsache werden die Gläser nicht die für Display-Anwendungen geforderte hohe visuelle Qualität (Blasenfreiheit) aufweisen.

Es ist Aufgabe der Erfindung, Gläser bereitzustellen, die die genannten physikalischen und chemischen Anforderungen erfüllen, die an Gläser für Substrate für TFT-Displays, für MEMS (Microengineering and -mechanical systems), für waferbondfähige Isolatoren (SOI, Silicon on insulator) und für Dünnfilm-Solarzellen gestellt werden, Gläser, die einen prozeßgünstigen Verarbeitungstemperaturbereich sowie eine hohe Entglasungsstabilität aufweisen, so daß für ihre Herstellung - je nach spezifischem Anforderungsprofil für die genannten Substrat-Typen verschiedene Flachglas-Darstellungsverfahren wie Floatverfahren oder Ziehverfahren zur Anwendung kommen können. Damit werden auch die herstellbaren Dikken variabel in Bereich zwischen 30 µm und einigen mm. Solche Gläser müssen gut schmelzbar und läuterbar sein.

Die Bildung von leicht flüchtigen Boratverbindungen wie Zinkborat, Bleiborat, Bariumaluminoborat, die die innere Glasqualität beeinträchtigen können, soll vermieden werden oder zumindest minimiert werden.

Zur Herstellung von Microsheet-Scheiben im Dickenbereich zwischen 30 und 50 µm nach dem Microsheet-Down-Draw-Verfahren (MDD-Verfahren) sollten die Gläser gleichzeitig eine sehr hohe Entglasungsfestigkeit und bestimmte Verarbeitungstemperaturen V_{A} besitzen:

Geeignete Verarbeitungstemperaturen sind Temperaturen bei der Viskosität von 10⁴ dPas von vorzugsweise 1260 bis 1320 °C Eine Kenngröße für die Entglasungsstabilität bzw. Kristallisationsstabilität ist die maximale Kristallwachstumsgeschwindigkeit vₘₐₓ [µm/h]. Sie gibt das größte beobachtete Längenwachstum der gebildeten Kristalle an: Bei einer Auftragung der Wachstumsgeschwindigkeit v der Kristalle gegen die Temperatur T entspricht vₘₐₓ der Wachstumsgeschwindigkeit bei der Temperatur des maximalen Kristallwachstums, bei KGₘₐₓ. Je kleiner vₘₐₓ ist, desto weniger kristallines Volumen wird gebildet. Dieses vₘₐₓ sollte hier nicht mehr als 10 µm/h betragen.

Zur Herstellung von Glasscheiben für Display-Anwendungen im Microfloat-Verfahren, insbesondere von großformatigen, sollte die Temperatur bei der 10⁴ dPas-Viskosität vorzugsweise zwischen 1250 und 1350 °C betragen. Leicht reduzierbare Glaskomponenten wie As₂O₃, Sb₂O₃, P₂O₅, Bi₂O₃, Nb₂O_{5,} Ta₂O_{5,} PbO, CdO und auch ZnO sollten nicht in der Glaszusammensetzung enthalten sein, weil sie unter den reduzierenden Bedingungen im Floatbad zum elementaren Zustand reduziert werden können und einen grauen metallischen Oberflächenspiegel oder andere Mikrooberflächendefekte erzeugen können. Die Anforderungen an die Kristallisationsbeständigkeit sind hier nicht so hoch wie beim genannten MDD-Verfahren. So ist ein vₘₐₓ von ≤ 30 µm/h noch ausreichend.

Die oben genannte Aufgabe wird durch ein Glas gemäß Patentanspruch 1 und durch eine Verfahren gemäß Patentanspruch 7 gelöst.

Erfindungsgemäß liegen die drei glasbildenden Komponenten SiO₂, B₂O₃ und Al₂O₃ in eng definierten Gehalten, also auch in einem engen Verhältnis zueinander vor: Der B₂O₃-Gehalt ist eher gering und beträgt wenigstens 6,5 Gew.-% und höchstens 9,5 Gew.-%. Bevorzugt ist eine Beschränkung auf weniger als 9 Gew.- %. Besonders bevorzugt ist ein Gehalt zwischen 7 und 8,5 Gew.-% B₂O₃. Der Al₂O₃-Gehalt kann zwischen 14 und 21 variieren. Bevorzugt ist ein Gehalt von wenigstens 15 Gew.-% und höchstens 20 Gew.-%. Besonders bevorzugt ist ein Gehalt von wenigstens 15,5 Gew.-% und höchstens 19,5 Gew.-%. Überraschenderweise kann der SiO₂-Gehalt ohne Nachteile hinsichtlich der Viskosität im Schmelzbereich relativ hoch sein, nämlich > 60 - 65 Gew.-%, wodurch die chemische Beständigkeit (z.B. gegen 5%ige HCI) deutlich verbessert wird und gleichzeitig auch eine niedrige Dichte gewährleistet werden kann. Noch höhere Anteile würden die Viskosität im Schmelzbereich zu sehr erhöhen. Bevorzugt ist ein Anteil von wenigstens 60,5 Gew.-%, besonders bevorzugt ist ein Anteil von höchstens 62,5 Gew.-%. So werden die gewünschten niedrigen thermischen Ausdehnungskoeffizienten α_{20/300} im Bereich von 3,0 bis 3,8 x 10⁻⁶/K bei gleichzeitig geringer Dichte ρ von höchstens 2,50 g/cm³ erreicht werden. Der besonders bevorzugte Bereich von α_{20/300} = 3,0 - 3,3 x 10⁻⁶/K wird durch einen hohen Al₂O₃ - Gehalt von wenigstens 18,0 Gew.-% bei gleichzeitigem SiO₂-Gehalt von wenigstens 60,5 Gew.-%erreicht. Aufgrund der wechselseitigen Beeinflussung von B₂O₃ und Al₂O₃ in der Glasstruktur kann nur im genannten engen Bereich des B₂O₃ - Gehaltes die gewünschte gute chemische und Kristallisations-Beständigkeit erzielt werden. Niedrigere B₂O₃-Gehalte erhöhen die Entglasungsneigung und erhöhen die thermische Ausdehnung durch direkte Beeinflussung der Al-Koordination, wo der Anteil an fünf- und sechsfach koordiniertem Aluminium zunimmt. Bei zu hohem Gehalt an B₂O₃ und Al₂O₃ nimmt die Beständigkeit gegen Salzsäure ab.

Das erfindungsgemäße Glas enthält relativ wenig Erdalkalioxide. Dadurch wird eine niedrige Dichte bei einem hohen Strain Point und einer geringen thermischen Ausdehnung erreicht. Sie liegen im Glas zu insgesamt wenigstens 8 Gew.-% vor. Bei einem noch geringeren Anteil wären die Temperaturen bei den im Schmelzund Formgebungsbereich benötigten Viskositäten zu hoch. Ein ausgewogenes Verhältnis zwischen kleinen Kationen und großen Kationen der Erdalkalioxide wirkt sich positiv auf die Verarbeitungstemperatur und auf die Entglasungsstabilität aus. Daher enthält das Glas 1-8 Gew.-% MgO und 1-6 Gew.-% CaO sowie 0,1 - 3,5 Gew.-% BaO und 1-9 Gew.-% SrO. Der Gesamtanteil an MgO, CaO, SrO und BaO soll dabei auf maximal 16 Gew.-% beschränkt bleiben, da ansonsten die chemische Beständigkeit wieder abnimmt.
Die Verwendung von SrO ist gegenüber BaO bevorzugt, um die Dichte der Gläser gering zu halten. Würde auf die schweren Oxide BaO und SrO ganz verzichtet bzw. wäre ihr Anteil zu gering, so würde die Entglasungsneigung zunehmen und würden die Transformationstemperatur sowie die Temperatur bei der Viskosität von 10^{14,5} dPas sinken. Bei zu hohen Anteilen an BaO und SrO würde die Verabeitungstemperatur inakzeptabel hoch. Die BaO-armen Gläser werden bevorzugt im Floatverfahren verarbeitet, während die BaO-reicheren Gläser aufgrund ihrer noch besseren Kristallisationsstabilität vorzugsweise im Ziehverfahren verarbeitet werden. Bevorzugt ist ein Erdalkali-Gehalt (Σ RO = MgO + CaO + SrO + BaO) zwischen 9 und < 15 Gew.-%, wobei die einzelnen Oxide in folgenden Anteilen vorliegen sollten: MgO 1-7 Gew.-%; CaO 1-5; SrO 2-8; BaO 0,5-3. Besonders bevorzugt sind 3-5 Gew.-% MgO; 2-5 CaO; 3-7 SrO und 0,6 - < 3, ganz besonders bevorzugt bis 1,5, BaO, bei 10 - 14 Gew.-% RO. Das Glas ist bis auf unvermeidliche Verunreinigungen frei von ZnO sowie von Alkalioxiden. Durch den speziellen Gehalt an großen Kationen (Ba²⁺, Sr²⁺) im Borosilicatgrundglas bei relativ hohen Al₂O₃-Gehalten weisen die erfindungsgemäßen Gläser eine niedrige thermische Dehnung und sehr günstige Viskosität-Temperaturkurven, d. h. einen steilen Viskositätsverlauf im Transformationsbereich und einen flacheren Viskositätsanstieg im Verarbeitungsbereich auf.

Weiter enthält das Glas 0,1-1,5 Gew.-% ZrO₂. ZrO₂ verbessert die chemische Beständigkeit. Bevorzugt ist ein Mindestgehalt von 0,2 Gew.-%. Der ZrO₂-Maximalgehalt ist durch Schwerlöslichkeit dieser Komponente begrenzt und beträgt bevorzugt 1 Gew.-%, besonders bevorzugt 0,6 Gew.-%. Außerdem enthält das Glas 0,1 - 1 Gew.-% TiO₂. Dadurch wird die sonst oft beobachtete Solarisationsneigung der Aluminoborosilicatgläser, d.h. die Abnahme der Transmission im sichtbaren Wellenlängenbereich aufgrund von UV-VIS-Strahlung, minimiert. Bevorzugt ist ein Gehalt von höchstens 0,5 Gew.-%, besonders bevorzugt von wenigstens 0,2 Gew.-% und höchstens 0,4 Gew.-%.
Weiter enthält das Glas Zinnoxid, das im Glas im Redoxgleichgewicht SnO₂/SnO vorliegt und das Läutermittelfunktion hat, und zwar 0,1 - 1 Gew.-%, berechnet und eingesetzt als SnO₂. Bevorzugt ist ein Gehalt von wenigstens 0,2 Gew.-% und von höchstens 0,8 Gew.-%, besonders bevorzugt von höchstens 0,6 Gew.-% SnO₂.

Erfindungswesentlich ist neben dem SnO₂ das Vorhandensein von 0,01-1,0 Gew.-% CeO₂: Durch die Kombination von SnO₂ mit CeO₂ wird das Redoxgleichgewicht SnO₂/SnO stabilisiert und wird eine für Aluminoborosilicatgläser außergewöhnlich gute Läuterwirkung erzielt, so daß die erfindungsgemäßen Gläser die geforderte hohe visuelle Qualität aufweisen. Außerdem stabilisieren SnO₂ und CeO₂ in Verbindung mit ZrO₂ die chemische Beständigkeit der Gläser. Bei höheren CeO₂ - Gehalten nimmt allerdings die UV-Absorption zu, und die Absorptionskante verschiebt sich in den VIS-Bereich, so daß im Glas eine deutliche Gelbfärbung auftritt. Gleichzeitig fluoreszieren die Gläser merklich. Bevorzugt ist deshalb ein Gehalt von höchstens 0,5 Gew.-%.
Dieser relativ geringe CeO₂-Gehalt wird durch die Zugabe von Nitrat ermöglicht, das das Redoxgleichgewicht SnO₂/SnO in ausreichender Weise stabilisiert.
Erfindungsgemäß wird hier NH₄NO₃ in Mengen zwischen 0,2 und 3 Gew.-% dem Gemenge zugegeben. Durch die starke Oxidationswirkung von NH₄NO₃ wird die Läutermittelkombination SnO₂/CeO₂ im Einschmelzbereich in ihrer vierwertigen Form stabilisiert, so daß eine zu frühzeitige Abgabe des Sauerstoffs, vermieden wird.
Beim Erreichen der Läutertemperatur steht dann ein deutlich größerer Anteil an vierwertigem SnO₂ und CeO₂ für die Zersetzung zu SnO und Ce₂O₃ unter Sauerstofffreisetzung (= Läuterung) zur Verfügung, so daß eine außergewöhnlich gute visuelle Qualität der Gläser gefunden wurde.

Bevorzugt ist ein Zusatz von wenigstens 0,5 Gew.-% NH₄NO₃, besonders bevorzugt von wenigstens 1,0 Gew.-%.
Durch den Zusatz von NH₄NO₃ können gleichzeitig auch andere polyvalente lonen in der Glasschmelze aufoxidiert werden. So wird die sehr gute Transmission der Gläser u.a. erst durch die Aufoxidation des Fe²⁺ zu Fe³⁺, das im Glas viel weniger intensiv als die zweiwertige Form färbt, ermöglicht.
NH₄NO₃ zersetzt sich bei den hohen Temperaturen vollständig, so daß keine Rückstände die Glaseigenschaften beeinträchtigen.

U.a. weil also auf die Läutermittel Arsenoxid und Antimonoxid verzichtet werden kann und die Gläser bis auf unvermeidliche Verunreinigungen sowohl frei von diesen Komponenten als auch von den anderen leicht reduzierbaren Bestandteilen Bleioxid, Cadmiumoxid, Zinnoxid, Bismutoxid, Nioboxid, Tantaloxid und Phosphoroxid sind, sind diese Gläser nicht nur mit verschiedenen Ziehverfahren, sondern auch mit dem Floatverfahren verarbeitbar. Soll das letztgenannte Verfahren nicht zum Einsatz kommen, so kann das Glas unter nicht reduzierenden Bedingungen, beispielsweise im Down-Draw-Verfahren. als zusätzliche(s) Läutermittel bis zu 1,5 Gew.-% As₂O₃ und/oder Sb₂O₃ enthalten. Auch der Zusatz von je 1,5 Gew.-% Cl⁻ (beispielsweise als BaCl₂ oder NH₄Cl), F⁻ (z.B. als CaF₂) oder SO₄²⁻ (z.B. als BaSO₄) ist möglich. Die Summe aus As₂O₃, Sb₂O₃, Cl⁻, F⁻ und SO₄²⁻ soll jedoch 1,5 Gew.-% nicht überschreiten. Durch den Zusatz von NH₄Cl kann der Wassergehalt der Schmelze auch bei Verwendung relativ wasserreicher Rohstoffe (wie z.B. Al(OH)₃ oder Mg(OH)₂, die ihrerseits das Einschmelzverhalten verbessern) erniedrigt werden, wodurch Reboilprobleme beim Abstehen und bei der Konditionierung des geläuterten Glases vermieden werden und das Ziel einer hohen visuellen Glasqualität (Blasen, Einschlüsse etc.) leichter erreicht werden kann.

### Ausführungsbeispiele:

Aus herkömmlichen Rohstoffen wurden bei 1640° C Gläser in Tiegeln aus Quarzglas erschmolzen, die Schmelze wurde anderthalb Stunden bei dieser Temperatur geläutert, anschließend in induktiv beheizte Platintiegel umgegossen und zur Homogenisierung 30 Minuten bei 1550° C gerührt.

Die Tabellen zeigen in den Beispielen 1 bis 11 (Tabelle 1) erfindungsgemäße Gläser mit ihren Zusammensetzungen und ihren wichtigsten Eigenschaften sowie in den Vergleichsbeispielen A bis M (Tabelle 2) nicht erfindungsgemäße Gläser. Die verschiedenen chemischen Beständigkeiten werden folgendermaßen angegeben: Allseitig polierte Glasplättchen der Abmessungen 70 mm x 50 mm x 2 mm werden für die angegebene Zeitdauer bei der angegebenen Temperatur mit der jeweiligen Lösung behandelt, und der Gewichtsverlust (Abtragswert) wird bestimmt und in mg/cm² angegeben.
- H₂O: Behandlung mit Wasser für 24 Stunden bei 95° C.
- HCI: Behandlung mit 5%iger Salzsäure für 24 Stunden bei 95° C.
- NaOH: Behandlung mit 5%iger Natronlauge für 6 Stunden bei 95° C.
- "BHF": Behandlung mit 10%iger Flußsäurelösung für 20 Minuten bei 20° C

Als Kenngrößen für die Kristallisationsneigung (Entglasungsneigung) bzw. - stabilität sind die Obere Entglasungsgrenze (Liquidustemperatur) OEG [°C] und die maximale Kristallwachstumsgeschwindigkeit vₘₐₓ [µm/h] angegeben.
Die Temperaturen für die Viskositäten 10^{14,5} dPas, 10¹³ dPas, 10^{7,6} dPas und 10⁴ dPas sind in den Tabellen als T 14,5; T 13; T 7,6 und T 4 bezeichnet.
Als weitere Eigenschaften der Gläser sind angegeben die Transformationstemperatur Tg [°C], der thermische Ausdehnungskoeffizient α_{20/300} [10⁻⁶/K] und die Dichte p [g/cm³].

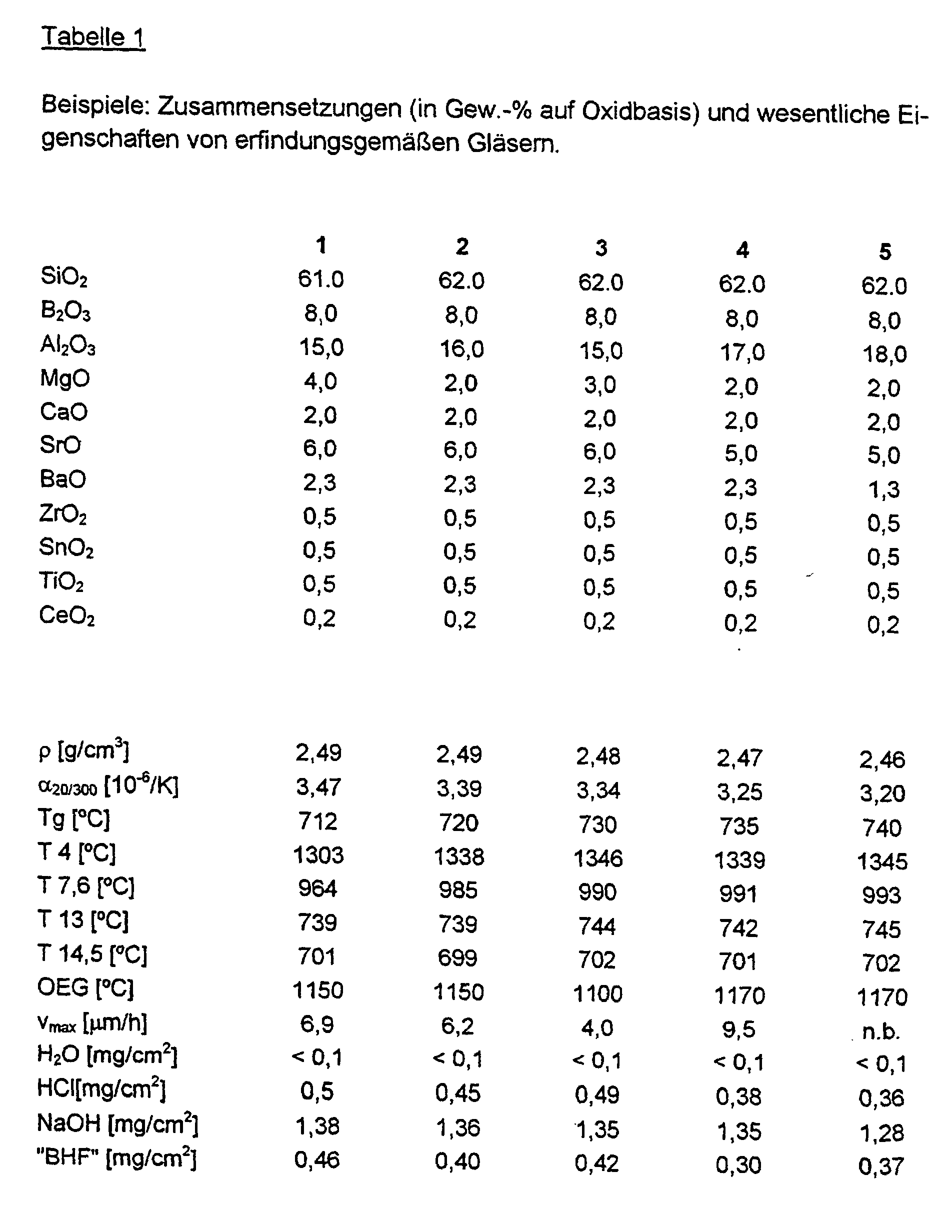

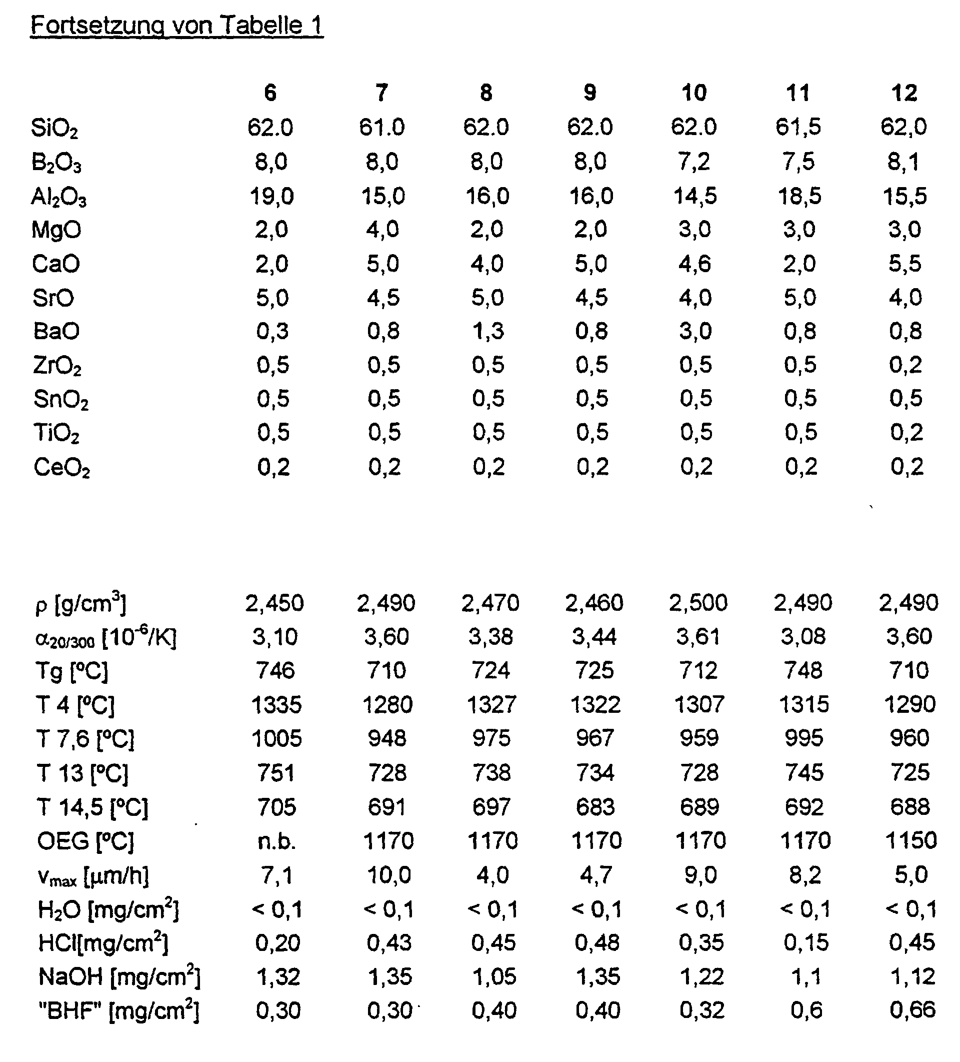

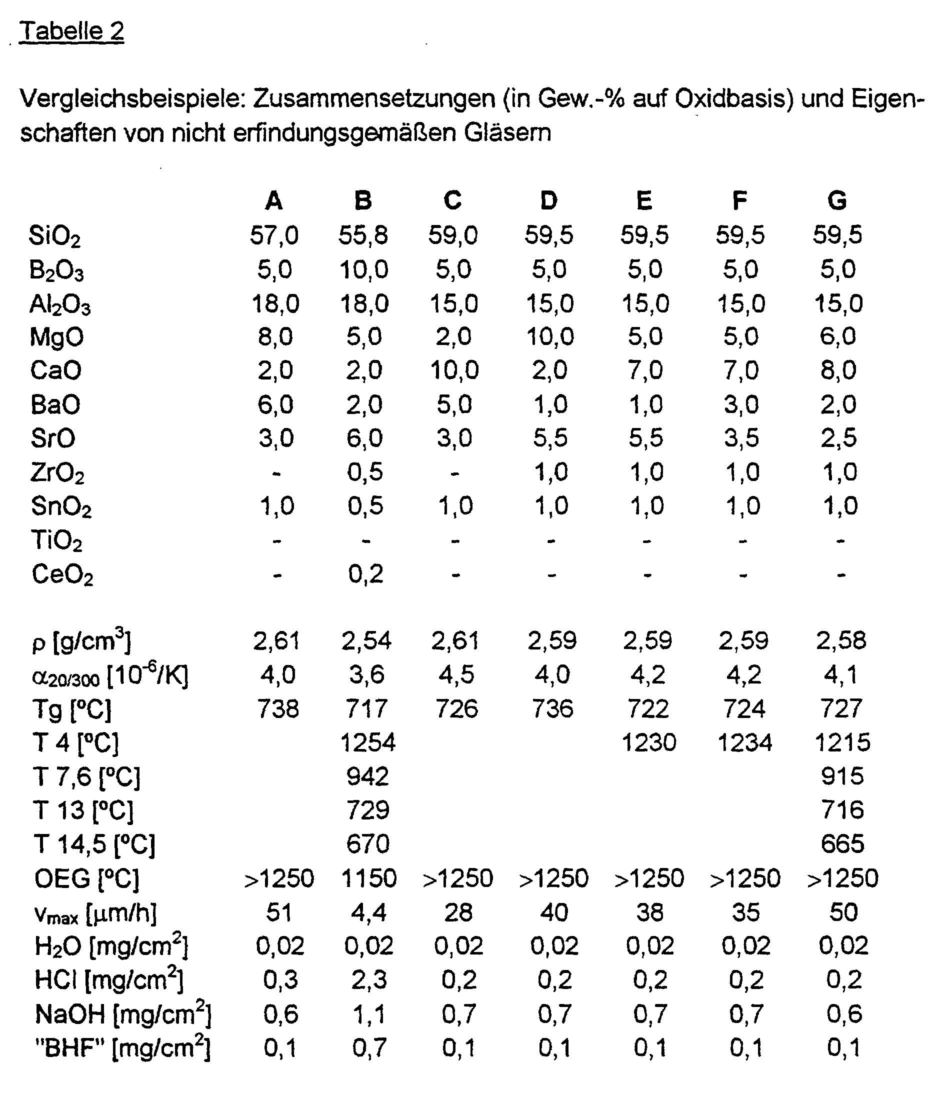

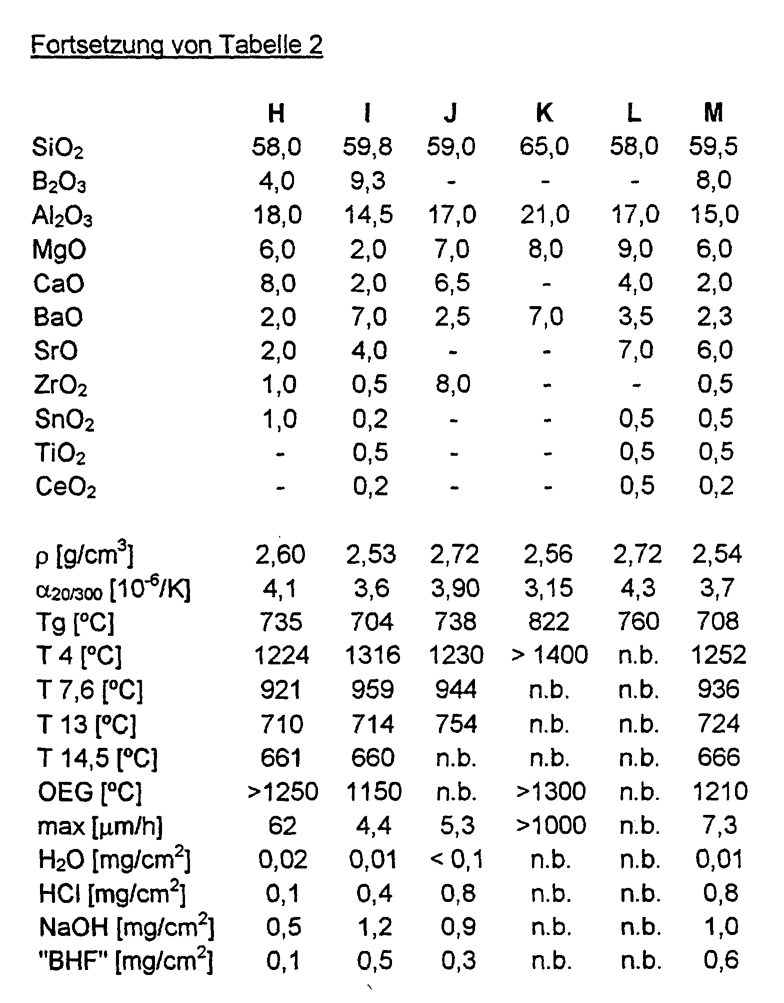

Weiter wurde auch die Wirksamkeit der Läuterung der Schmelzen, d.h. die visuelle Qualität des Glases, durch Zählung der im erkalteten Glas enthaltenen Blasen beurteilt. Dabei bedeuten die Symbole in Tabelle 3 im einzelnen
- xx: Blasenzahl > 500 pro kg Glas
- x: Blasenzahl > 100 ... 500 pro kg Glas
- +/-: Blasenzahl 50 ... 100 pro kg Glas
- +: Blasenzahl < 50 pro kg Glas

Tabelle 3 verdeutlicht den guten Einfluß des NH₄NO₃-Zusatzes zum Gemenge beim erfindugnsgemäßen Herstellungsverfahren mit dem ansonsten üblichen Verfahrensschritten, Gemengezubereitung (Gemengeeinlegen), Schmelzen, Läutern, Homogenisierung, Heißformgebung, d. h. Verarbeitung in z. B. Ziehoder auch Floatverfahren, auf die visuelle Qualität der Gläser.

**Tabelle 3**

| Visuelle Qualität der Gläser (Beispiele 1 - 12 mit NH₄NO₃-Zusatz und teilweise auch NH₄Cl-Zusatz zum Gemenge, Vergleichsbeispiele A - M) (Zusammensetzungen s. Tabelle 1 und 2). | | | | | | | |
|---|---|---|---|---|---|---|---|
| Gew.-% | 1 | 2 | 3 | | 4 | 5 | 6 |
| NH₄NO₃ | 0,2 | 0,5 | 1,0 | | 1,0 | 1,5 | 1,5 |
| NH₄Cl | - | 0,2 | - | | - | - | 0,5 |
| Visuelle Qualität | + | + | + | | + | + | + |
| | | | | | | | |
| Gew.-% | 7 | 8 | 9 | | 10 | 11 | 12 |
| NH₄NO₃ | 0,5 | 0,5 | 2,0 | | 2,0 | 2,0 | 2,0 |
| NH₄Cl | 0,5 | 1,0 | 1,5 | | - | 0,5 | - |
| Visuelle Qualität | + | + | + | | + | + | + |
| | | | | | | | |
| Gew.-% | A | B | C | | D | E | F |
| NH₄NO₃ | - | - | - | | - | - | - |
| NH₄Cl | - | - | - | | - | - | - |
| Visuelle Qualität | x | +/- | x | | x | x | x |
| | | | | | | | |
| Gew.-% | G | H | I | J | K | L | M |
| NH₄NO₃ | - | - | - | - | - | | - |
| NH₄Cl | - | - | - | - | - | | - |
| Visuelle Qualität | x | x | +/- | xx | xx | +/- | +/- |

Auch die Gläser aus den Vergleichsbeispielen besitzen jeweils einzelne sehr gute Eigenschaften, jedoch erfüllt - im Gegensatz zu den erfindungsgemäßen Gläsem - keines der Vergleichsgläser das gesamte Anforderungsprofil an ein Displaysubstratglas für TFT-Anwendungen: zu geringe B₂O₃-Anteile verringern die Entgiasungsstabilität und setzen die thermische Ausdehnung herauf (Beispiele A, C-H). Ein zu hoher Gehalt an B₂O₃ setzt die Beständigkeit gegen Salzsäure herab (Beispiel B). Beispiel I verdeutlicht die Notwendigkeit eines ausgewogenen Verhältnisses von kleinen Erdalkaliionen zu großen: Bei einer "richtigen" Gesamtmenge an Erdalkalioxiden, aber zuviel BaO, ist die Verarbeitungstemperatur sehr hoch. Die B₂O₃-freien Vergleichsbeispiele J, K und L besitzen entweder eine viel zu schlechte Entglasungsbeständigkeit oder sind in bezug auf ihre thermische Ausdehnung nicht gut genug an polykristallines Silicium angepaßt. Das Vergleichsbeispiel M mit zu niedrigem SiO₂-Gehalt (wie auch A-J und L) und zu hohem RO-Gehalt (wie auch A, C-H und L) weist wie die anderen Beispiele eine zu hohe Dichte auf. Auch T_{g} und T 14,5 sind noch nicht hoch genug, um die hohen Anforderungen an die Gläser zu erfüllen.

Dagegen vereinen die erfindungsgemäßen Gläser mit ihrem eng definierten Zusammensetzungsbereich sämtliche diskutierten Eigenschaften in sich:
- Ihr thermischer Ausdehnungskoeffizient (α_{20/300} zwischen 3,0 und 3,8 x 10⁻⁶/K) ist sehr gut an polykristallines Silicium angepaßt
- Ihre Dichte ist sehr gering (g ≤ 2,50 g/cm³)
- Ihre chemische Beständigkeiten sind ausgezeichnet. (z. B. Gewichtsverlust von höchstens 1,0 mg/cm² nach 24 stündiger Behandlung in 5%iger Salzsäure bei 95 °C)
- Sie besitzen eine ausreichende Solarisationsstabilität.
- Sie besitzen günstige Verarbeitungstemperaturen. (Temperatur bei der Viskosität 10⁴ dPas zwischen 1280 °C und 1350 °C)
- Die Temperatur bei der Viskosität von 10^{14,5} dPas beträgt wenigstens 680° C. Die Transformationstemperatur Tg beträgt zwischen 710 °C und 780 °C
- Die Gläser sind alkalifrei.
- Die Gläser besitzen eine sehr gute Kristallisationsbeständigkeit.
- Die Gläser lassen sich aufgrund ihres Temperatur-Viskositätsverlauf und ihrer geringen Kristallisationsneigung, solange sie frei von leicht reduzierbaren Bestandteilen sind, sowohl mit verschiedenen Ziehverfahren als auch mit dem Floatverfahren verarbeiten. Es versteht sich jedoch, daß ein konkretes Glas aus dem erfindungsgemäßen Zusammensetzungsbereich aufgrund seines ganz speziellen Eigenschaftsprofils für das eine Verfahren noch besser geeignet ist als für das andere. Dem Fachmann ist es leicht möglich, aufgrund der hier gemachten Angaben das für die jeweilige Anwendung und die speziellen Bedürfnisse optimale Glas auszuwählen.
- Die Gläser besitzen aufgrund der ausgewogenen Kombination an Bestandteilen, insbesondere an Läutermitteln, die durch den Zusatz von NH₄NO₃ und/oder NH₄Cl in ihrer Wirkung verstärkt werden können, eine sehr gute visuelle Qualität. Durch den Anteil an zugesetztem NH₄Cl kann gleichzeitig der Wassergehalt des Glases beeinflußt werden.
- Durch den Zusatz des starken Oxidationsmittels NH₄NO₃ wird im Glas gleichzeitig die dreiwertige Form des Eisen―Ions stabilisiert, was zur Erhöhung der Transmission beiträgt.
- Die zu Scheiben verarbeiteten Gläser besitzen eine hohe Qualität hinsichtlich Warp (Scheibenverwölbung bzw. Scheibenverbiegung), Waviness (Feinwelligkeit der Scheibenoberfläche), Roughness (Mikrorauhigkeit der Scheibenoberfläche), Planität und Dickenkonstanz (in-plate thickness variation)

Aufgrund dieses Eigenschaftsprofils sind die erfindungsgemäßen Gläser hervorragend geeignet für die Verwendung als Substratgläser in der Displaytechnik, insbesondere in der TFT-Displaytechnik, und in der Dünnfilmphotovoltaik sowie für MEMS und für SOI.

## Patentansprüche

1. Alkalifreies Aluminoborosilicatglas, das folgende Zusammensetzung (in Gew.-% auf Oxidbasis) aufweist:
| | |
|---|---|
| SiO₂ | > 60 - 65 |
| B₂O₃ | 6,5 - 9,5 |
| Al₂O₃ | 14 - 21 |
| MgO | 1 - 8 |
| CaO | 1 - 6 |
| SrO | 1 - 9 |
| BaO | 0,1 - 3,5 |
| mit MgO + CaO + SrO + BaO | 8 - 16 |
| ZrO₂ | 0,1 - 1,5 |
| SnO₂ | 0,1 - 1 |
| TiO₂ | 0,1 - 1 |
| CeO₂ | 0,01-1 |

2. Aluminoborosilicatglas nach Anspruch 1,
**gekennzeichnet durch** folgende Zusammensetzung (in Gew.-% auf Oxidbasis):
| | |
|---|---|
| SiO₂ | 60,5 - 65,0 |
| B₂O₃ | 6,5 - 9,0 |
| Al₂O₃ | 15 - 20 |
| MgO | 1 - 7 |
| CaO | 1 - 5 |
| SrO | 2-8 |
| BaO | 0,5 - 3 |
| mit MgO + CaO + SrO + BaO | 9 - 15 |
| ZrO ₂ | 0,2 - 1 |
| SnO ₂ | 0,2 -0,8 |
| TiO ₂ | 0,1 - 0,5 |
| CeO ₂ | 0,01 - 0,5 |

3. Aluminoborosilicatglas nach Anspruch 1 oder 2,
**gekennzeichnet**
**durch** folgende Zusammensetzung (in Gew.-% auf Oxidbasis):
| | |
|---|---|
| SiO₂ | 60,5 - 62,5 |
| B₂O₃ | 7,0 - 8,5 |
| Al₂O₃ | 15,5 - 19,5 |
| MgO | 3 - 5 |
| CaO | 2 - 5 |
| SrO | 3 - 7 |
| BaO | 0,6 - 1,5 |
| mit MgO + CaO + SrO + BaO | 10 - 14 |
| ZrO₂ | 0,2 - 0,6 |
| SnO₂ | 0,2 - 0,6 |
| TiO₂ | 0,2 - 0,4 |
| CeO₂ | 0,01 - 0,5 |

4. Aluminoborosilicatglas nach wenigstens einem der Ansprüche 1 bis 3
**dadurch gekennzeichnet,**
**daß** es zusätzlich enthält:
| | |
|---|---|
| As₂O₃ | 0 - 1,5 |
| Sb₂O₃ | 0 - 1,5 |
| Cl⁻ | 0 - 1,5 |
| F⁻ | 0 - 1,5 |
| SO₄²⁻ | 0 - 1,5 |
| mit As₂O₃ + Sb₂O₃ + Cl⁻ + F⁻ + SO₄²⁻ ≤ 1,5 | |

5. Auf einer Floatanlage herstellbares Aluminoborosilicatglas nach wenigstens einem der Ansprüche 1 bis 3
**dadurch gekennzeichnet,**
**daß** es bis auf unvermeidliche Verunreinigungen frei ist von Arsenoxid, Antimonoxid, Bleioxid, Cadmiumoxid, Zinkoxid, Bismutoxid, Nioboxid,Tantaloxid und Phosphoroxid.

6. Aluminoborosilicatglas nach wenigstens einem der Ansprüche 1 bis 5, das einen thermischen Ausdehnungskoeffizienten α_{20/300} zwischen 3,0 und 3,8x10⁻⁶/K, eine Temperatur bei der Viskosität 10^{14,5} dPas von wenigstens 680 °C, eine Temperatur bei der Viskosität 10⁴ dPas zwischen 1270 °C und 1350 °C, eine Transformationstemperatur Tg zwischen 710 °C und 780 °C, eine Dichte p von höchstens 2,50 g/cm³ und einen Gewichtsverlust von höchstens 1,0 mg/cm² nach 24stündiger Behandlung in 5%iger Salzsäure bei 95 °C aufweist.

7. Verfahren zum Herstellen eines Glases gemäß einem der Ansprüche 1 bis 6 mit den Verfahrensschritten Gemengezubereitung, Schmelzen, Läutern, Homogenisieren, Heißformgebung
**dadurch gekennzeichnet,**
**daß** dem Gemenge 0,2 - 3 Gew.-% NH₄ NO₃ zugesetzt werden.

8. Verwendung des Aluminoborosilicatglases nach wenigstens einem der Ansprüche 1 bis 6 als Substratglas in der Displaytechnik.

9. Verwendung des Aluminoborosilicatglases nach wenigstens einem der Ansprüche 1 bis 6 als Substratglas in der TFT-Displaytechnik.

10. Verwendung des Aluminoborosilicatglases nach wenigstens einem der Ansprüche 1 bis 6 als Substratglas in der Dünnfilm-Photovoltaik.

## Claims

1. Aluminoborosilicate glass which contains no alkali metals and has the following composition (in % by weight based on oxide):
| | |
|---|---|
| SiO₂ | > 60 - 65 |
| B₂O₃ | 6.5 - 9.5 |
| Al₂O₃ | 14 - 21 |
| MgO | 1 - 8 |
| CaO | 1 - 6 |
| SrO | 1 - 9 |
| BaO | 0.1 - 3.5 |
| with MgO + CaO + SrO + BaO | 8 - 16 |
| ZrO₂ | 0.1 - 1.5 |
| SnO₂ | 0.1 - 1 |
| TiO₂ | 0.1 - 1 |
| CeO₂ | 0.01 - 1 |

2. Aluminoborosilicate glass according to Claim 1, **characterized by** the following composition (in % by weight based on oxide) :
| | |
|---|---|
| SiO₂ | 60.5 - 65.0 |
| B₂O₃ | 6.5 - 9.0 |
| Al₂O₃ | 15 - 20 |
| MgO | 1 - 7 |
| CaO | 1 - 5 |
| SrO | 2 - 8 |
| BaO | 0.5 - 3 |
| with MgO + CaO + SrO + BaO | 9 - 15 |
| ZrO₂ | 0.2 - 1 |
| SnO₂ | 0.2 - 0.8 |
| TiO₂ | 0.1 - 0.5 |
| CeO₂ | 0.01 - 0.5 |

3. Aluminoborosilicate glass according to Claim 1 or 2, **characterized by** the following composition (in % by weight based on oxide):
| | |
|---|---|
| SiO₂ | 60.5 - 62.5 |
| B₂O₃ | 7.0 - 8.5 |
| Al₂O₃ | 15.5 - 19.5 |
| MgO | 3 - 5 |
| CaO | 2 - 5 |
| SrO | 3 - 7 |
| BaO | 0.6 - 1.5 |
| with MgO + CaO + SrO + BaO | 10 - 14 |
| ZrO₂ | 0.2 - 0.6 |
| SnO₂ | 0.2 - 0.6 |
| TiO₂ | 0.2 - 0.4 |
| CeO₂ | 0.01 - 0.5 |

4. Aluminoborosilicate glass according to at least one of Claims 1 to 3, **characterized in that** it additionally contains:
| | |
|---|---|
| As₂O₃ | 0 - 1.5 |
| Sb₂O₃ | 0 - 1.5 |
| Cl⁻ | 0 - 1.5 |
| F⁻ | 0 - 1.5 |
| SO₄²⁻ | 0 - 1.5 |
| with As₂O₃ + Sb₂O₃ + Cl⁻ + F⁻ + SO₄²⁻ | ≤ 1.5 |

5. Aluminoborosilicate glass according to at least one of Claims 1 to 3, which can be produced on a float glass installation, **characterized in that** apart from inevitable impurities it is free of arsenic oxide, antimony oxide, lead oxide, cadmium oxide, zinc oxide, bismuth oxide, niobium oxide, tantalum oxide and phosphorus oxide.

6. Aluminoborosilicate glass according to at least one of Claims 1 to 5, which has a coefficient of thermal expansion α_{20/300} of between 3.0 and 3.8×10⁻⁶/K, a temperature at the viscosity 10^{14.5} dPas of at least 680°C, a temperature at viscosity 10⁴ dPas of between 1270°C and 1350°C, a transformation temperature Tg of between 710°C and 780°C, a density p of at most 2.50 g/cm³ and a weight loss of at most 1.0 mg/cm² after treatment for 24 hours in 5% strength hydrochloric acid at 95°C.

7. Process for producing a glass according to one of Claims 1 to 6 comprising the process steps of batch preparation, melting, refining, homogenising, hot shaping, **characterized in that** 0.2 - 3 % % by weight NH₄NO₃ is added to the batch.

8. Use of the aluminoborosilicate glass according to at least one of Claims 1 to 6 as substrate glass in display technology.

9. Use of the aluminoborosilicate glass according to at least one of Claims 1 to 6 as substrate glass in TFT display technology.

10. Use of the aluminoborosilicate glass according to at least one of Claims 1 to 6 as substrate glass in thin-film photovoltaics.

## Revendications

1. Verre d'aluminoborosilicate exempt d'alcali, qui présente la composition suivante (en % en poids sur base d'oxydes)
| | |
|---|---|
| SiO₂ | >60 - 65 |
| B₂O₃ | 6,5 - 9,5 |
| Al₂O₃ | 14 - 21 |
| MgO | 1 - 8 |
| CaO | 1 - 6 |
| SrO | 1 - 9 |
| BaO | 0,1 - 3,5 |
| avec MgO + CaO + SrO + BaO | 8 - 16 |
| ZrO₂ | 0,1 - 1,5 |
| SnO₂ | 0,1 - 1 |
| TiO₂ | 0,1 - 1 |
| CeO₂ | 0,01 - 1 |

2. Verre d'aluminoborosilicate selon la revendication 1 **caractérisé par** la composition suivante (en % en poids sur base d'oxydes)
| | |
|---|---|
| SiO₂ | 60,5 - 65,0 |
| B₂O₃ | 6,5 - 9,0 |
| Al₂O₃ | 15 - 20 |
| MgO | 1 - 7 |
| CaO | 1 - 5 |
| SrO | 2 - 8 |
| BaO | 0,5 - 3 |
| avec MgO + CaO + SrO + BaO | 9 - 15 |
| ZrO₂ | 0,2 - 1 |
| SnO₂ | 0,2 - 0,8 |
| TiO₂ | 0,1 - 0,5 |
| CeO₂ | 0,01 - 0,5 |

3. Verre d'aluminoborosilicate selon la revendication 1 ou 2 **caractérisé par** la composition suivante (en % en poids sur base d'oxydes)
| | |
|---|---|
| SiO₂ | 60,5 - 62,5 |
| B₂O₃ | 7,0 - 8,5 |
| Al₂O₃ | 15,5 - 19,5 |
| MgO | 3 - 5 |
| CaO | 2 - 5 |
| SrO | 3 - 7 |
| BaO | 0,6 - 1,5 |
| avec MgO + CaO + SrO + BaO | 10 - 14 |
| ZrO₂ | 0,2 - 0,6 |
| SnO₂ | 0,2 - 0,6 |
| TiO₂ | 0,2 - 0,4 |
| CeO₂ | 0,01 - 0,5 |

4. Verre d'aluminoborosilicate selon au moins l'une des revendications 1 à 3 **caractérisé en ce qu'**il contient en outre
| | |
|---|---|
| As₂O₃ | 0 - 1,5 |
| Sb₂O₃ | 0 - 1,5 |
| Cl⁻ | 0 - 1,5 |
| F⁻ | 0 - 1,5 |
| SO₄²⁻ 0 - 1,5 avec As₂O₃ + Sb₂O₃ + Cl⁻ + F⁻ + SO₄²⁻ ≤ 1,5 | |

5. Verre fabricable sur une installation de flottage selon au moins l'une des revendications 1 à 3, **caractérisé en ce qu'**il est exempt d'oxyde d'arsenic, d'oxyde d'antimoine, d'oxyde de plomb, d'oxyde de cadmium, d'oxyde de zinc, d'oxyde de bismuth, d'oxyde de niobium, d'oxyde de tantale et d'oxyde de phosphore jusqu'aux impuretés inévitables.

6. Verre d'aluminoborosilicate selon au moins l'une quelconque des revendications 1 à 5, qui présente un coefficient de dilatation thermique α_{20/300} entre 3,0 et 3,8 x 10⁻⁶/K, une température à la viscosité de 10^{14,5} dPa.s d'au moins 680°C, une température à la viscosité de 10⁴ dPa.s entre 1270°C et 1350°C, une température de transformation Tg entre 710°C et 780°C, une masse volumique ρ d'au maximum 2,50g/cm³ et une perte de poids d'au maximum 1,0 mg/cm² après un traitement de 24 heures dans de l'acide chlorhydrique à 5% à 95°C.

7. Procédé de fabrication d'un verre selon l'une quelconque des revendications 1 à 6, comportant les étapes de procédé préparation du mélange, fusion, affinage, homogénéisation, formage à chaud, **caractérisé en ce qu'**on ajoute 0,2 - 3% en poids de NH₄NO₃ au mélange.

8. Utilisation du verre d'aluminoborosilicate selon au moins l'une quelconque des revendications 1 à 6 comme verre de substrat dans la technique d'affichage.

9. Utilisation du verre d'aluminoborosilicate selon au moins l'une quelconque des revendications 1 à 6 comme verre de substrat dans la technique d'affichage TFT.

10. Utilisation du verre d'aluminoborosilicate selon au moins l'une quelconque des revendications 1 à 6 comme verre de substrat dans la technique photovoltaïque des couches minces.
